**Europäisches Patentamt**

**European Patent Office**

**Office européen des brevets**

(19)

(11) Veröffentlichungsnummer: **0 050 323**
A1

(12) ## EUROPÄISCHE PATENTANMELDUNG

(21) Anmeldenummer: 81108382.3

(51) Int. Cl.³: **F 03 B 13/12**

(22) Anmeldetag: 15.10.81

(30) Priorität: 16.10.80 DE 3039030

(43) Veröffentlichungstag der Anmeldung: 28.04.82
Patentblatt 82/17

(84) Benannte Vertragsstaaten: **BE DE FR GB IT NL SE**

(71) Anmelder: **Gramer, Allan, Box 123, S-826 00 Söderhamn (SE)**

(72) Erfinder: **Javorsky, Bruno, Sjöbo (SE)**

(74) Vertreter: **Popp, Eugen et al, c/o Popp, Sajda und v. Bülow Patentanwälte Postfach 860624, D-8000 München 86 (DE)**

(54) **Verfahren und Vorrichtung zur Nutzung der Wasserwellen, insbesondere Brandungswellen, immanenten Energie.**

(57) Zur Nutzung eines Teils der Wasserwellen, insbesondere Brandungswellen, immanenten Energie wird vorgeschlagen, die zwischen den Wellenkämmen befindliche Luft einzuschließen und zusammen mit Wasser in einen Druckbehälter (16) zu leiten, wobei die eingeschlossene Luft zur Förderung des Wassers auf ein höheres Niveau dient. Zum Einschluß der zwischen den Wellenkämmen (28) ankommender Brandungswellen befindlichen Luft dient ein Wellenfang (10), an dessen Ende ein Durchgang (14) zu einem Wasser und Luft aufnehmenden Druckbehälter (16) anschließt, wobei in dem Durchgang (14) ein Rückschlagventil (12) od.dgl. zur Verhinderung eines Rückflusses aus dem Druckbehälter (16) angeordnet ist. Zur Förderung des Wassers auf ein höheres Niveau bzw. in einen höhergelegenen Wasserspeicher (20) ist im unteren Bereich des Druckbehälters (16) ein Steigrohr (18) angeschlossen.

Nach einem alternativen Vorschlag kann an den Durchgang (14) unmittelbar eine Steigleitung (22) anschließen, in der das eindringende Wasser durch eindringende Luft nach oben zu einem höhergelegenen Druckbehälter oder Wasserspeicher mitgerissen wird.

- 1 -

## Beschreibung

Die Erfindung betrifft ein Verfahren und eine Vorrichtung zur Nutzung eines Teils der Wasserwellen, insbesondere Brandungswellen, immanenten Energie.

Die Weltmeere sind auf Grund der Gezeiten, Strömungen und meist ständig herrschenden Winde stets in Bewegung. Es entstehen dadurch an den Küsten mehr oder weniger starke Brandungswellen, deren Energie es gilt auszunutzen. Diese Energiequelle gewinnt in einer Zeit progressiver Verknappung fossiler Energieträger zunehmend an Bedeutung.

Der vorliegenden Erfindung liegt daher die Aufgabe zugrunde, ein Verfahren und eine Vorrichtung zu schaffen, das bzw. die mit einfachen Mitteln eine optimale Ausnutzung der den Wellen, insbesondere Brandungswellen, immanenten Energie erlaubt.

Diese Aufgabe wird verfahrensgemäss dadurch gelöst, dass die zwischen den Wellenkämmen befindliche Luft eingeschlossen und zusammen mit Wasser in einen Druckbehälter geleitet wird, wobei die eingeschlossen Luft zur Förderung des Wassers auf ein höheres Niveau dient.

Dabei wird vorzugsweise die zwischen den Wellenkämmen befindliche Luft im Druckbehälter komprimiert und zur Förderung des in den Druckbehälter eingedrungenen Wassers auf ein höheres Niveau verwendet.

Die erfindungsgemässe Vorrichtung zur Durchführung dieses Verfahrens ist gekennzeichnet durch
- einen die Luft zwischen den Wellenkämmen ankommender Brandungswellen einschliessenden Wellenfang,
- an dessen Ende ein Durchgang zu einem Wasser und Luft aufnehmenden Druckbehälter anschliesst, wobei
- in dem Durchgang ein Rückschlagventil oder dgl. zur Verhinderung eines Rückflusses aus dem Druckbehälter angeordnet ist.

- 2 -

Durch die erfindungsgemässe Lösung wird also die zwischen den Wellenkämmen befindliche Luft sowie die im Wasser eingeschlossene Luft in einem Druckbehälter gefangen und durch ständig neue Zufuhr komprimiert. Die der komprimierten Luft immanente Druckenergie wird dann zur Förderung des im Druckbehälter befindlichen Wassers auf ein höheres Niveau ausgenutzt. Bei Bedarf kann das auf ein höheres Niveau geförderte Wasser wieder in Fallenergie, z. B. zum Antrieb einer Wasserturbine, umgewandelt werden.

Überschüssige Druckluft im Druckbehälter kann zum unmittelbaren Antrieb einer Luftturbine oder dgl. verwendet werden.

Der Druckbehälter befindet sich vorzugsweise unmittelbar am Ende des Wellenfangs. Er kann jedoch auch auf einem etwas höheren Niveau liegen, wobei die Förderung des den Durchgang passierenden Wassers zu dem Druckbehälter durch die eingeschlossene Luft erfolgt, die das Wasser in einer Steigleitung nach oben mitreisst.

Der Wellenfang umfasst vorzugsweise eine etwa auf mittlerer Höhe zwischen maximalem Wellental und maximalem Wellenberg, vorzugsweise etwa im oberen Drittel dieser Höhe, angeordnete Kragdecke, die in Richtung ihres freien Endes, d. h. entgegen der Richtung der ankommenden Wellen schräg nach oben geneigt ist. Dadurch soll gewährleistet sein, dass sämtliche ankommenden Wellen unter der Kragdecke gefangen werden, und zwar unabhängig von der Wellenhöhe. Die Unterseite der Kragdecke soll auf jedem Fall in einer solchen Höhe angeordnet sein, dass sie ein Entweichen von zwischen den Wellenkämmen ankommender Wellen befindlicher Luft nach oben verhindert, so dass diese Luft zwischen benachbarten Wellenkämmen bzw. Wellenbergen und der Kragdecke eingeschlossen wird. Diese eingeschlossene Luft wird dann auf Grund der Fortpflanzung der Wellenkämme bzw. Wellenberge zu dem am Ende des Wellenfangs angeordneten Durchgang gefördert, durch den die eingeschlossene Luft in den erwähnten Druckbehälter gepresst wird.

- 3 -

Zur Erhöhung der Effizienz wird der Wellenfang auch seitlich durch Seitenwände begrenzt, die in Richtung der ankommenden Wellen bzw. zum Durchgang hin konvergierend verlaufen.

Die Kragdecke und die beiden Seitenwände bilden dann eine Art Trichter, in dem die zwischen den Wellenkämmen bzw. Wellenbergen befindliche Luft nach allen Seiten hin am Entweichen gehindert wird.

Die erfindungsgemässe Lösung erlaubt also eine Umwandlung der Wellenenergie in Druckenergie, also in potentielle Energie, nach Art eines "hydraulischen Widders".

Nachstehend werden bevorzugte Ausführungsbeispiele der Erfindung anhand der beigefügten Zeichnung näher erläutert.

Es zeigen:

Fig. 1a eine erste Ausführungsform einer "Wellenpumpe" im Querschnitt,

Fig. 1b die Wellenpumpe gemäss Fig. 1a in Draufsicht und verkleinertem Masstab,

Fig. 2 eine zweite Ausführungsform einer Wellenpumpe im schematischen Querschnitt,

Fig. 3 eine dritte Ausführungsform der Wellenpumpe im schematischen Querschnitt, und

Fig. 4 eine Wellenluftpumpe ohne Förderung von Wasser auf ein höheres Niveau.

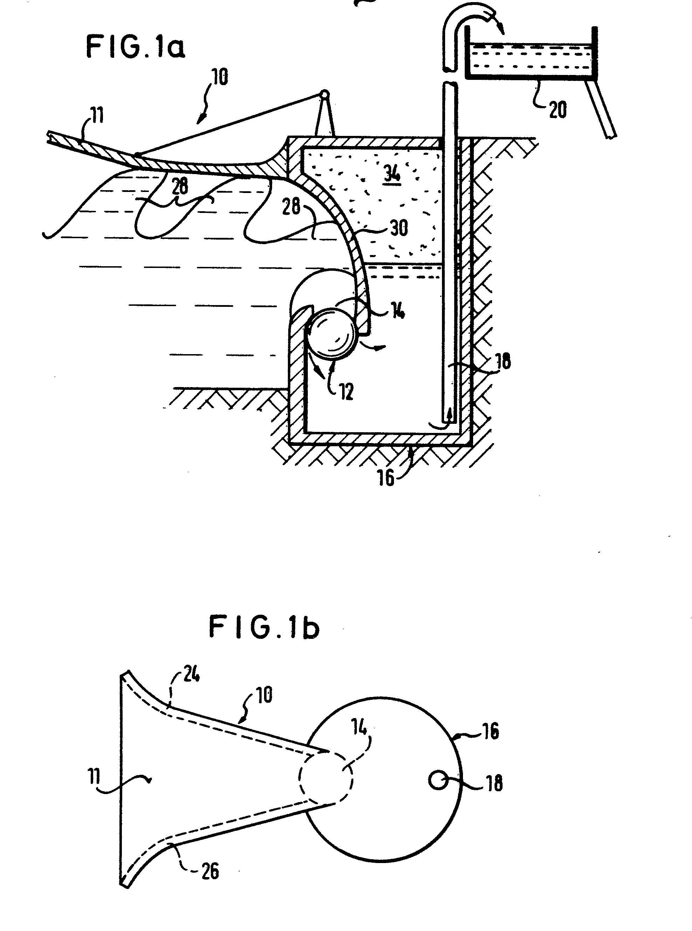

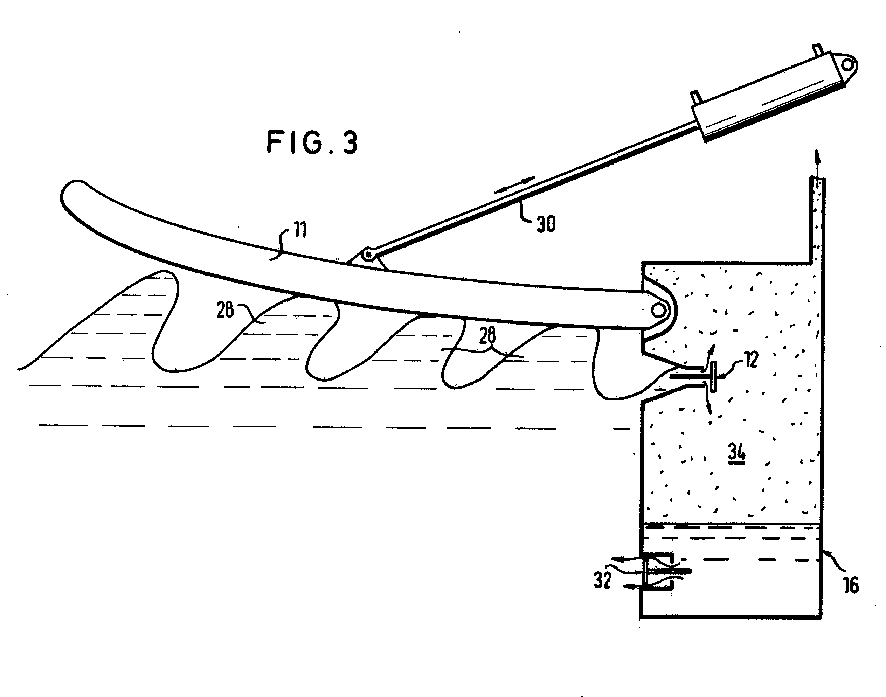

Die in den Fig. 1a und 1b dargestellte Vorrichung bzw. Wellenpumpe umfasst einen trichterförmig ausgebildeten Wellenfang 10 mit einer Kragdecke 11 und zwei Seitenwänden 24, 26. Am Ende des Wellenfangs 10 ist ein Durchgang 14 zu einem wasser-und luftaufnehmenden Druckbehälter 16 angeschlossen. Im Durchgang 14 befindet sich ein Rückschlagventil 12 zur Verhinderung eines Rückflusses aus dem Druckbehälter 16. Das Rückschlagventil 12 wird bei dem dargestellten Beispiel durch eine Rückschlagkugel gebildet. Die Kragdecke 11 ist in Richtung ihres freien Endes, d. h. entgegen der Richtung der ankommenden Wellen schräg nach oben geneigt. Die beiden Seitenwände 24, 26 verlaufen in Richtung des Durchgangs 14 konvergierend. Am Ende des Wellenfangs 10 ist eine ausgehend von der Kragdecke 11 nach unten gewölbte Abschlusswand 30 vorgesehen, die eine Umlenkung des im Wellenfang 10 eingeschlossenen Wassers und Luft in den sich vertikal nach unten erstreckenden Durchgang 14 bewirkt. Im unteren Bereich des Druckbehälters 16 ist ein Steigrohr 18 angeschlossen, durch das Wasser aus dem Druckbehälter 16 zu einem auf einem höheren Niveau gelegenen Wasserspeicher 20 gefördert werden kann. Wie Fig. 1a deutlich erkennen lässt, dient der Druckbehälter 16 zur Aufnahme von Wasser und Luft, das in den Druckbehälter durch den Durchgang 14 eindringt. Im Druckbehälter 16 bildet sich oberhalb des Wassers ein Luftpolster 34, dessen Druck bei jeder Öffnung des Rückschlagventils 12 entsprechend der neu eindringenden Luft ansteigt. Dieser Druck bewirkt einen Anstieg des im Druckbehälter angesammelnden Wassers durch das Steigrohr 18 zu dem höher gelegenen Wasserspeicher 20. Der Luftdruck im Druckbehälter 16 kann durch ein in der Decke desselben angeordnetes Überdruckventil geregelt werden. Auch ist es möglich, überschüssige Druckluft zum unmittelbaren Antrieb einer Luftturbine oder dgl. zu verwenden.

Die Unterseite der Kragdecke ist vorzugsweise hyperbolisch oder parabolisch gekrümmt. Ferner sind die beiden Seitenwände 24, 26 im Bereich ihrer freien Enden überproportional nach aussen gekrümmt, so dass insgesamt ein etwa glockenförmiger Trichter entsteht.

Wie Fig. 3 erkennen lässt, ist die Neigung der Kragdecke 11 vorzugsweise veränderbar, z. B. mittels einer Hubstange 36, deren eines Ende an der Oberseite der Kragdecke 11 angelenkt und deren anderes Ende z. B. mit einer Kolbenstange einer Kolben-Zylinder-Einheit in Verbindung steht. Auch kann bei Bedarf vorgesehen sein, dass die gesamte Vorrichtung bzw. Wellenpumpe in ihrer Höhenlage verstellbar ist, z. B. an einem Teleskoppfeiler, einer Spindel oder dgl. angebracht ist.

Wie Fig. 3 deutlich zeigt, wird die zwischen den Wellenkämmen bzw. Wellenbergen 28 befindliche Luft zwischen diesen und der Kragdecke eingeschlossen und auf dem Weg zum Durchgang 14 komprimiert und in den Druckbehälter 16 zusammen mit Wasser gepresst.

Falls man nur die in den Druckbehälter 16 eingepresste Luft zum Antrieb einer Maschine, z. B. Turbine, ausnutzen möchte, ist im unteren Bereich des Druckbehälters 16 ein Wasserablauf 32 vorgesehen, durch den das in den Druckbehälter 16 eindringende Wasser praktisch vollständig abfliessen kann. Im Druckbehälter 16 befindet sich dann überwiegend nur noch Druckluft, die zum Antrieb z. B. einer Turbine verwendet wird.

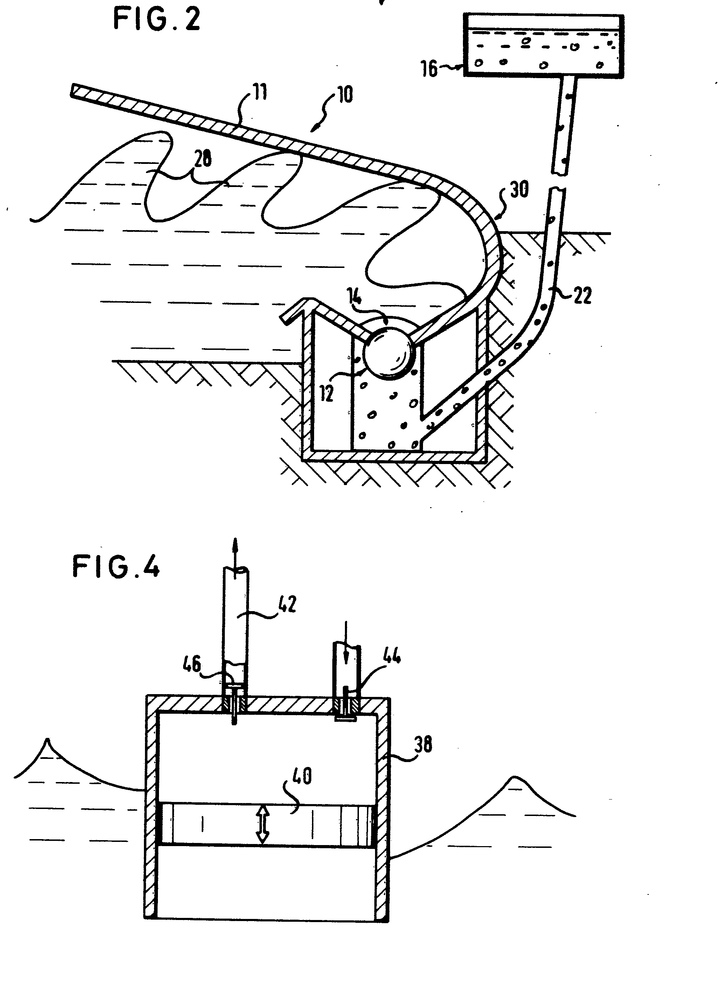

In Fig. 2 befindet sich der Druckbehälter 16 auf einem höheren Niveau. Das den Durchgang 14 passierende Wasser wird in einer Steigleitung 22 durch die mitgerissene und eingeschlossene Luft nach Art einer sogenannten "Mammutpumpe" nach oben zu dem Druckbehälter 16 mitgerissen. Im Druckbehälter 16 findet dann wieder die Trennung zwischen Wasser und Luft statt.

Die beschriebene Vorrichtung arbeitet an vielen Küsten auch bei ruhigem Wetter, z. B. an den Küsten der Kanarischen Inseln, wo die Brandungswellen auch bei Windstille eine Höhe von etwa 1 m haben. Die Geschwindigkeit der Brandungswellen beträgt ca. 1 m/sec. Diese Wellen sind in der Lage, Luft zu komprimieren, wobei der Kompressionsdruck etwa 1,5 m Wassersäule beträgt (wahrscheinlich höher). Nur etwa ein Drittel dieser komprimierten Luft wird in den Druckbehälter gepresst. Dies reicht aus, um etwa 4 bis 5 KW/m Küste bzw. Wellenfang zu erzeugen.

- 6 -

Die Kragdecke 11 besteht vorzugsweise aus armiertem Beton, wobei die Unterseite ausgehend vom Durchgang 14 in Richtung des freien Endes hyperbolisch oder parabolich nach oben gekrümmt sein kann. Im Bereich des Durchganges 14 befindet sich die Unterseite der Kragdecke 11 etwa 0,5 m über dem durchschnittlichen Wasserspiegel. Das freie Ende der etwa 3,5 bis 5 m langen Kragdecke befindet sich dann ca. 2,5 bis 3 m über dem Wasserspiegel.

In Fig. 4 ist eine reine Wellenluftpumpe dargestellt, die aus einem topfförmigen Gehäuse 38 und einem innerhalb desselben angeordneten Kolben 40 besteht. Das offene Ende des topfförmigen Gehäuses 38 ist in das Wasser eingetaucht. Somit kann auf die Unterseite des Kolbens 40 das sich in vertikaler Richtung bewegende Wasser einwirken. Zwischen der Oberseite des Kolbens 40 und dem topfförmigen Gehäuse 38 ist Luft eingeschlossen, die bei einer Aufwärtsbewegung des Kolbens 40 durch eine Leitung 42 gepresst wird. Bei einer Abwärtsbewegung des Kolbens 40 wird neue Luft aus der Umgebung über ein Einlassventil 44 angesaugt. Während der Ansaugung schliesst in der Leitung 42 ein Rückschlagventil 46. Das Einlassventil 44 ist ebenfalls ein Rückschlagventil, das beim Auspressen der Luft durch die Leitung 42 schliesst. An die Leitung 42 kann eine Luftturbine oder dgl. angeschlossen sein. Die Wellenluftpumpe gemäss Fig. 4 arbeitet also allein durch Ausnutzung der vertikalen Wellenbewegung.

Die Wellenluftpumpe gemäss Fig. 4 kann in vorteilhafterWeise mit den Vorrichtungen gemäss den Fig. 1 bis 3 kombiniert werden, wobei die Leitung 42 in den Druckbehälter 16 mündet, um in diesem den Luftdruck zu erhöhen, so dass das im Druckbehälter 16 angesammelte Wasser auf ein noch höheres Niveau gefördert werden kann.

Mittels der erfindungsgemässen Lösung wird also die Stossenergie der Brandungswellen sowie die von diesen mitgerissene und eingeschlossene Luft zur Erhaltung von potentieller Energie ausgenutzt.

-7-

Gute Ergebnisse lassen sich auch mit einer Lösung erzielen, bei der der Wellenfang 10 lediglich durch die beiden zum Durchgang 14 hin konvergierend verlaufenden Seitenwände 24, 26, also ohne Kragdecke 11, gebildet wird. Zwischen den beiden Seitenwänden 24, 26 entstehen übergroße Wellen, die dann von einer relativ großen Höhe auf das im Durchgang 14 angeordnete Ventil 12 herabstürzen. Dabei wird relativ wenig Luft durch den Durchgang 14 mitgerissen, so daß im wesentlichen der reine "hydraulische Widdereffekt" eintritt.

Sämtliche in den Unterlagen offenbarten Merkmale werden als erfindungswesentlich beansprucht, soweit sie einzeln oder in Kombination gegenüber dem Stand der Technik neu sind.

0050323

---

Verfahren und Vorrichtung zur Nutzung der Wasserwellen,
insbesondere Brandungswellen, immanenten Energie

---

## Patentansprüche

1. Verfahren zur Nutzung eines Teils der Wasserwellen, insbesondere Brandungswellen, immanenten Energie, dadurch g e k e n n z e i c h n e t , dass die zwischen den Wellenkämmen befindliche Luft eingeschlossen und zusammen mit Wasser in einen Druckbehälter geleitet wird, wobei die eingeschlossene Luft zur Förderung des Wassers auf ein höheres Niveau dient.

2. Verfahren nach Anspruch 1, dadurch gekennzeichnet, dass die zwischen den Wellenkämmen befindliche Luft zur Förderung des Wassers auf ein höheres Niveau im Druckbehälter komprimiert wird.

3. Vorrichtung zur Nutzung eines Teils der Wasserwellen, insbesondere Brandungswellen, immanenten Energie, insbesondere zur Durchführung des Verfahrens nach Anspruch 1 oder 2,
g e k e n n z e i c h n e t   durch

- einen die Luft zwischen den Wellenkämmen (28) ankommender Brandungswellen einschliessenden Wellenfang (10),
- an dessen Ende ein Durchgang (14) zu einem Wasser und Luft aufnehmenden Druckbehälter (16) anschliesst, wobei
- in dem Durchgang (14) ein Rückschlagventil (12) oder dgl. zur Verhinderung eines Rückflusses aus dem Druckbehälter angeordnet ist.

4. Vorrichtung nach Anspruch 3, dadurch gekennzeichnet, dass im unteren Bereich des Druckbehälters (16) ein Steigrohr (18) zu einem auf einem höheren Niveau angeordneten Wasserspeicher (20) angeschlossen ist.

5. Vorrichtung nach Anspruch 3, dadurch gekennzeichnet, dass an den Durchgang (14) eine Steigleitung (22) anschliesst, in der das eindringende Wasser durch die eindringende Luft nach oben zu einem höher gelegenen Druckbehälter oder Wasserspeicher mitgerissen wird.

6. Vorrichtung nach einem der Ansprüche 3 bis 5, dadurch gekennzeichnet, dass der Wellenfang (10) eine etwa auf mittlerer Höhe zwischen Wellental und Wellenberg, vorzugsweise etwa im oberen Drittel dieser Höhe angeordnete Kragdecke (11) umfasst, die in Richtung ihres freien Endes, d. h. entgegen der Richtung der ankommenden Wellen schräg nach oben geneigt ist.

7. Vorrichtung nach Anspruch 6, dadurch gekennzeichnet, dass das freie Ende der Kragdecke (11) oberhalb der (durchschnittlich) höchsten Wellenberge liegt.

8. Vorrichtung nach einem der vorhergehenden Ansprüche, insbesondere der Ansprüche 6 und 7, dadurch gekennzeichnet, dass der Wellenfang (10) seitlich durch zwei zum Durchgang (14) hin konvergierend verlaufende Seitenwände (24, 26) begrenzt ist, so dass ein etwa trichterförmiger Wellenfang (10) entsteht.

9. Vorrichtung nach einem der Ansprüche 3 bis 8, dadurch gekennzeichnet, dass die Höhenlage und/oder die Neigung der Kragdecke (11) veränderbar ist.

10. Vorrichtung nach einem der Ansprüche 3 bis 9, dadurch gekennzeichnet, dass die untere Seite der Kragdecke (11) eine in Richtung der ankommenden Wellen hyperbolische oder parabolische Krümmung aufweist.

11. Vorrichtung nach einem der Ansprüche 8 bis 10, dadurch gekennzeichnet, dass die einander zugekehrten Seiten der Seitenwände (24, 26) hyperbolisch oder parabolisch gekrümmt sind.

12. Vorrichtung nach einem der Ansprüche 3 bis 11, dadurch gekennzeichnet, dass am Ende des Wellenfangs (10) eine sich etwa aufrecht erstreckende Abschlusswand (30) vorgesehen ist.

13. Vorrichtung nach einem der Ansprüche 8 bis 9, dadurch gekennzeichnet, dass am Ende des Wellenfangs eine von der Kragdecke (11) ausgehend nach unten gewölbte Abschlusswand vorgesehen ist, und dass die Einlassöffnung des Durchgangs (14) in einer etwa horizontalen Ebene liegt.

14. Vorrichtung nach Anspruch 3, dadurch gekennzeichnet, dass der Druckbehälter einen Wasserablauf (32) aufweist.

15. Vorrichtung nach einem der Ansprüche 3 bis 5, dadurch gekennzeichnet, daß der Wellenfang (10) durch zwei zum Durchgang (14) hin konvergierend verlaufende Seitenwände (24, 26) gebildet ist.

1/3

**FIG.1a**

**FIG.1b**

# FIG. 3

28

28

28

11

30

12

34

16

32

FIG. 2

FIG. 4

0050323

Europäisches
Patentamt

**EUROPÄISCHER RECHERCHENBERICHT**

Nummer der Anmeldung

EP 81 10 8382

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 568 903 (LOMBROSO) <br> * Seite 2, Zeile 35 - Seite 3, Zeile 92 * | 1,2,4, 9,14 |
| X | US - A - 1 791 239 (BRASELTON) <br> * Seite 1, Zeile 66 - Seite 3, Zeile 9; Abbildungen 4,5 * | 1,3,6, 7,9, 12 |
| X | FR - A - 883 542 (FIGUE) <br> * Seite 1, Zeile 5 - Seite 2, Zeile 25 * | 1-4,8, 12,13 |
| | FR - A - 761 818 (AUBERGER-COLOMB) <br> * Seite 2, Zeilen 9-102 * | 6-8, 10,11 |
| XP | GB - A - 2 067 246 (PRATT) <br> * Seite 1, Zeilen 12-84 * | 1,3,6, 7,9 |
| | GB - A - 2 009 328 (PETRUS-LOCH- NER) <br> * Seite 1, Zeile 112 - Seite 2, Zeile 65 * | 1-3,5 |
| | DE - A - 2 507 330 (RICAFRANCA) <br> * Abbildung 1 * | 15 |

**KLASSIFIKATION DER ANMELDUNG (Int. Cl.¹)**

F 03 B 13/12

**RECHERCHIERTE SACHGEBIETE (Int. Cl.³)**

F 03 B

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie-gende Theorien oder Grund-sätze
E: älteres Patentdokument, das jedoch erst am oder nach dem Anmeldedatum veröffentlicht worden ist
D: in der Anmeldung angeführtes Dokument
L: aus andern Gründen ange-führtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21-01-1982 | DE WINTER |

EPA form 1503.1   06.78